# FASCICULE DE BREVET EUROPEEN

(11) **EP 2 440 806 B1**
(45) Date de publication et mention de la délivrance du brevet: **10.12.2014**
(21) Numéro de dépôt: 10725160.5
(22) Date de dépôt: 11.06.2010
(51) Int. Cl.: F16F 9/36

(54) **AMORTISSEUR ET ATTERRISSEUR EQUIPE D'UN TEL AMORTISSEUR**
STOSSDÄMPFER UND MIT SOLCH EINEM STOSSDÄMPFER VERSEHENES FAHRWERK
SHOCK ABSORBER AND LANDING GEAR PROVIDED WITH SUCH A SHOCK ABSORBER

(30) Priorité: 12.06.2009 FR 0902886
(43) Date de publication de la demande: 18.04.2012
(73) Titulaire: Messier-Bugatti-Dowty, 78140 Vélizy-Villacoublay (FR)
(72) Inventeur: LACERDA, Dominique, F-92100 Boulogne Billancourt (FR)
(74) Mandataire: Parzy, Benjamin Alain
(86) Numéro de dépôt international: PCT/EP2010/058272
(87) Numéro de publication internationale: WO 2010/142802

(56) Documents cités:
- DE-A1- 2 321 625
- FR-A1- 2 353 772
- FR-A1- 2 628 495
- US-A1- 2002 046 649

## Description

La présente invention concerne un amortisseur ainsi qu'un atterrisseur équipé d'un tel amortisseur.

L'invention trouvera avantageusement application dans le domaine aéronautique, toutefois bien que particulièrement prévu pour une telle application, l'amortisseur pourra également être employé dans d'autres domaines techniques faisant appel à des amortisseurs.

### ARRIERE PLAN DE L'INVENTION

De manière générale les amortisseurs prévus pour être intégrés dans des atterrisseurs comportent un cylindre et une tige coulissante. La tige coulisse de manière étanche dans le cylindre qui comporte un gaz sous pression et un liquide d'amortissement. Afin d'assurer la liaison entre le cylindre et la tige, il est prévu deux paliers dont un palier d'étanchéité qui a pour fonction additionnelle d'empêcher les fuites de liquide d'amortissement. De manière connue en soit le cylindre peut être constitué par le caisson de l'atterrisseur ou encore être réalisé indépendamment de ce dernier.

Selon un premier mode de réalisation connu le palier d'étanchéité comporte d'un côté un joint statique et de l'autre côté un joint dynamique, ce dernier étant disposé à l'interface entre le palier d'étanchéité et celui de la tige ou du cylindre qui coulisse relativement au palier d'étanchéité. Dans une application aéronautique, l'amortisseur est intégré à un atterrisseur et le joint dynamique est soumis à des pressions très élevées notamment lors de l'atterrissage des aéronefs. De ce fait le joint dynamique doit être régulièrement contrôlé et changé ce qui occasionne des frais de maintenance.

Selon un deuxième mode de réalisation tel que décrit dans le document FR2628495, on augmente la durée entre deux maintenances en prévoyant un deuxième joint dynamique de réserve, ce dernier étant utilisé une fois le premier joint dynamique usé. A cet effet on prévoit sur le palier portant les deux joints dynamiques un conduit pour mettre en communication l'espace inter-joints et la chambre annulaire adjacente. Le conduit permet de maintenir lubrifié le deuxième joint dynamique qui est alors mouillé et subit une pression identique sur chacun de ses côtés. Le conduit est muni de moyens de clapets qui sont actionnés pour fermer le conduit si le premier joint dynamique se met à fuir. L'étanchéité dynamique est alors réalisée par le deuxième joint dynamique. Ainsi, une simple intervention manuelle permet de mettre en service le deuxième joint dynamique.

Ce deuxième mode de réalisation constitue un progrès important et permet de réaliser un amortisseur avec des durées de fonctionnement accrues du palier d'étanchéité par rapport à ceux des amortisseurs proposés antérieurement. Toutefois le palier d'étanchéité ainsi réalisé, présente plusieurs inconvénients. D'une part les moyens de clapet doivent être actionnés manuellement et par conséquent le système nécessite une vérification régulière du premier joint dynamique. D'autre part, la commande manuelle des moyens de clapets représente une masse morte et un tel agencement nécessite que la commande manuelle puisse être accessible en service, de sorte qu'en pratique, seul un palier fixe de caisson peut être équipé d'un tel dispositif.

Par ailleurs, le document DE 2321625 décrit un amortisseur selon le préambule de la revendication 1.

### OBJET DE L'INVENTION

La présente invention a pour but de proposer un amortisseur comportant un palier d'étanchéité avec au moins deux joints dynamiques dans lequel la mise en service du deuxième joint dynamique s'effectue automatiquement, c'est-à-dire sans intervention manuelle, à partir d'une certaine usure du premier joint dynamique.

### RESUME DE L'INVENTION

A cet effet la présente invention concerne un amortisseur comportant un cylindre dans lequel une tige est montée pour coulisser dans une ouverture du cylindre au moyen de deux paliers disposés entre le cylindre et la tige, lesdits paliers, le cylindre et la tige délimitant entre eux une chambre annulaire, l'un au moins des paliers portant :
- des moyens d'étanchéité avec au moins deux joints dynamiques en contact avec celui de la tige ou du cylindre coulissant relativement au palier et définissant entre eux un espace inter-joints,
- des moyens de clapet installés dans un conduit du palier s'étendant entre la chambre annulaire et l'espace inter-joints pour mettre sélectivement en communication la chambre annulaire et l'espace inter joint dynamique.

Selon l'invention, les moyens de clapet sont passifs et sont agencés pour mettre normalement en communication la chambre annulaire avec l'espace inter-joints et isoler automatiquement l'espace inter-joints de la chambre annulaire lorsque la pression dans la chambre annulaire est supérieure à une pression de seuil déterminée.

Ainsi, l'étanchéité dynamique est initialement assurée par le premier joint dynamique, et grâce à la communication, le deuxième joint dynamique est mouillé par le fluide stagnant dans l'espace inter-joints et provenant de la chambre annulaire, tout en étant préservé des pressions supérieures à la pression de seuil par la fermeture automatique des moyens de clapet, de sorte que le deuxième joint dynamique est préservé des risques de séchage et de détérioration due à une exposition répétée à des pressions importantes. Le deuxième joint dynamique voit ainsi sa durée de vie nettement améliorée, puisqu'il assure une étanchéité dynamique à basse pression uniquement. Lorsque le premier joint dynamique (qui est lui soumis aux fortes pressions de la chambre annulaire) finit par s'user et fuir au point de laisser un passage direct pour le fluide de la chambre annulaire vers l'espace inter-joints, la même pression finit par régner de part et d'autre des moyens de clapet de sorte que ceux-ci restent ouverts en permanence. Le deuxième joint dynamique prend alors la relève du premier joint dynamique, ce de façon purement passive et automatique, sans intervention manuelle.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 est une vue schématique en coupe axiale d'un amortisseur conforme à l'invention ;
- la figure 2 représente de manière schématique un agrandissement d'un détail de la zone A de la figure 1 ;
- la figure 3 est une vue schématique en coupe axiale d'un amortisseur selon une variante de réalisation de l'invention.

### DESCRIPTION DETAILLEE DE L'INVENTION

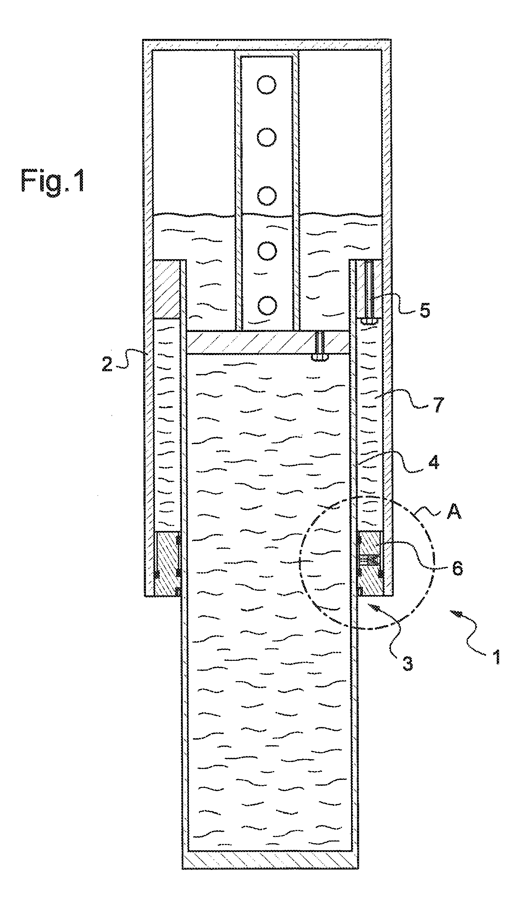

En se reportant à la figure 1 on voit représenté en vue en coupe axiale un amortisseur 1. Cet amortisseur 1 comporte un cylindre 2 présentant une ouverture 3 par laquelle une tige 4 est montée coulissante de manière étanche dans le caisson 2. Dans l'application principale de l'amortisseur 1 comme élément d'atterrisseur, le cylindre 2 constitue la jambe de l'atterrisseur tandis que la tige 4 est la tige coulissante 4 saillant vers la bas de l'atterrisseur et qui porte un essieu sur lequel sont montées les roues de l'atterrisseur.

Entre le cylindre 2 et la tige coulissante 4 s'étendent deux paliers de guidage dont un palier 5 solidaire de la tige 4 et un palier 6 solidaire du cylindre 2 qui remplit en outre une fonction d'étanchéité 6.

L'amortisseur 1 présente une chambre annulaire 7 qui communique avec le volume interne du cylindre 2 et qui s'étend d'une part entre le caisson 2 et la tige 4, et d'autre part entre les paliers 5,6. Le volume de la chambre annulaire 7 varie en fonction du déplacement de la tige 4 dans le cylindre 2.

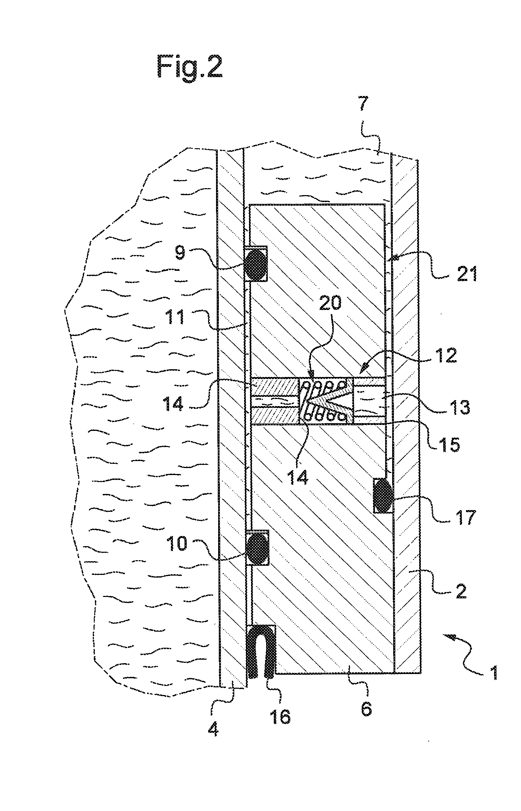

Comme plus particulièrement visible à la figure 2, le palier d'étanchéité 6 comporte des moyens d'étanchéité avec au moins un premier et deuxième joint dynamique d'étanchéité référencés respectivement 9 et 10, le deuxième joint dynamique d'étanchéité 10 constituant un joint dynamique de réserve.

Dans l'exemple de réalisation illustré, les joints dynamiques 9 et 10 sont logés dans des gorges annulaires ménagées dans le palier d'étanchéité 6. Ces joints dynamiques 9 et 10 sont en contact la paroi en regard de la tige 4 qui coulisse relativement au palier d'étanchéité 6. Le palier d'étanchéité 6 comporte également un joint statique 17 s'étendant contre la paroi du cylindre 2.

Entre les deux joints dynamiques 9 et 10, s'étend un espace inter-joints 11 laissé par le jeu de guidage entre la tige et le palier, (ici représenté de façon exagérée), l'espace inter-joints 11 étant délimité d'une part par les joints dynamiques 9,10, et d'autre part par les parois en regard de la tige 4 et du palier d'étanchéité 6.

Le palier d'étanchéité 6 comporte en outre des moyens de clapet 12, comprenant ici un clapet à pointeau 13 maintenu éloigné de son siège 14 par un ressort taré 15.

Ces moyens de clapet 12 sont installés dans un conduit 20 du palier 6 s'étendant entre l'espace inter-joints 11 et une face arrière 21 du palier 6 distante de la paroi en regard du cylindre 2 pour laisser libre à l'arrière du palier 6 un espace en communication directe avec la chambre annulaire 7, de sorte que le conduit 20 crée une connexion fluidique entre l'espace inter-joints 11 et la chambre annulaire 7.

Le fonctionnement du dispositif de l'invention est le suivant.

En fonctionnement normal, le premier joint dynamique 9 assure l'étanchéité de la chambre annulaire. Le clapet 12 reste ouvert de sorte que l'espace inter-joints 11 est rempli de fluide en provenance de la chambre annulaire 7. Le deuxième joint dynamique 10 est ainsi mouillé en permanence et ne risque donc pas de s'assécher ni de s'user par frottement sec sur la tige 4.

Cependant, si la pression dans la chambre annulaire devait augmenter suffisamment (par exemple une augmentation rapide de pression lors d'un impact à l'atterrissage) pour vaincre une pression de seuil déterminée par le tarage du ressort 15, le pointeau 13 est alors repoussé contre son siège 14 à l'encontre du ressort taré 15 et ferme le conduit 20 de sorte que la pression régnant dans la chambre annulaire 7 n'est pas transmise à l'espace inter-joints 11, ce qui a pour effet de protéger le deuxième joint dynamique des pressions supérieures à la pression de seuil. Le deuxième joint dynamique 10 constitue un joint dynamique de réserve qui est maintenu en condition de fonctionnement grâce aux dispositions de l'invention.

La pression de seuil est de préférence choisie significativement plus faible que la pression maximale pouvant régner dans la chambre annulaire (typiquement de l'ordre de 500 bars dans un amortisseur d'atterrisseur), tout en étant de préférence choisie supérieure à la pression de gonflage de l'amortisseur (typiquement 20 bars). Une valeur typique de la pression de seuil est 50 bars. Cette valeur seuil peut bien sûr varier en fonction des caractéristiques requises pour l'amortisseur.

Les moyens de clapet 12 sont passifs c'est-à-dire qu'aucune intervention extérieure n'est nécessaire à leur fonctionnement. Ainsi, le passage de la position de mise en communication à la position d'isolement et inversement est automatique à chaque franchissement du seuil de pression.

Lorsque le premier joint dynamique 9 (qui est directement soumis aux hautes pressions de la chambre annulaire) s'use au point qu'il ne puisse plus remplir correctement sa fonction d'étanchéité, la pression régnant dans la chambre annulaire est alors communiquée au deuxième joint dynamique d'étanchéité par transmission sous le premier joint dynamique 9 usé. La même pression finissant par régner dans l'espace inter-joints 11 et la chambre annulaire 7, les moyens de clapet 12 sont alors neutralisés et ne peuvent plus se fermer. Le deuxième joint dynamique 10 prend alors le relais du premier joint dynamique 9 pour assurer l'étanchéité de la chambre annulaire 7.

La mise en service du deuxième joint dynamique 10 ainsi décrite s'effectue sans intervention manuelle, mais au contraire automatiquement en fonction de l'état du premier joint dynamique ce qui permet de réduire considérablement les opérations de surveillance et de maintenance de cette partie de l'atterrisseur.

Un joint dynamique racleur 16 est avantageusement disposé sur le palier d'étanchéité 6 pour empêcher d'éventuels dépôts sur la surface externe de la tige 4 de venir blesser le deuxième joint dynamique 10. Il permet en outre d'empêcher l'introduction de poussières ou similaires à l'intérieur de la chambre annulaire 7.

Dans l'exemple illustré, le palier 6 qui porte les joints dynamiques est le palier solidaire du cylindre 2, c'est-à-dire le palier fixe. Cependant, une telle disposition n'est pas limitative.

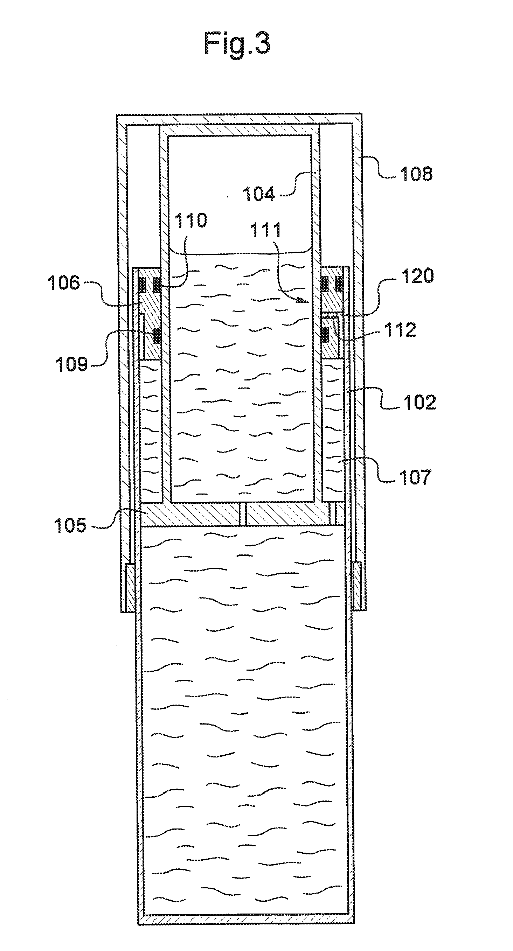

Comme cela est illustré à la figure 3, les deux joints dynamiques 109,110 peuvent être disposés sur un palier mobile 106, parfaitement inaccessible de l'extérieur en service. Dans l'exemple illustré, l'étanchéité dynamique est réalisée entre la tige coulissante 102 et un tube plongeur 104 plongeant à l'intérieur de la tige coulissante 102. Cette dernière est ici montée coulissante dans un caisson 108.

On reconnaît, comme dans l'exemple précédent, la chambre annulaire 107, l'espace inter-joints 111 et le conduit 120 reliant la chambre annulaire 107 et l'espace inter-joints 111, les moyens de clapet 112.

De la même façon que précédemment, les moyens de clapet 112 sont agencés pour mettre en communication l'espace inter-joints 111 et la chambre annulaire 107, et isoler automatiquement l'espace inter-joints 111 de la chambre annulaire 107 lorsque la pression dans cette dernière dépasse une pression de seuil.

Il conviendra, pour faire la correspondance avec le vocabulaire utilisé pur décrire le premier exemple de réalisation illustré à la figure 1, de considérer que la tige coulissante 102 est l'équivalent du cylindre 2, tandis que le tube plongeur 104 est l'équivalent de la tige 4.

Bien entendu, d'autres caractéristiques de l'invention pourront également être envisagées sans pour autant sortir du cadre de l'invention défini par les revendications ci-après.

En particulier, les moyens de clapet peuvent être prévus réglables, permettant de modifier la valeur de la pression seuil notamment en fonction des caractéristiques propres de l'atterrisseur ou de l'avion.

On pourra également prévoir au moins au moins un joint dynamique supplémentaire relié au deuxième joint dynamique par un deuxième espace inter-joints et des moyens de clapet supplémentaires entre la chambre annulaire et le deuxième espace inter-joints. Ces moyens de clapet supplémentaires fonctionnent de manière analogue aux moyens de clapet 12 de sorte que le joint dynamique supplémentaire de réserve entre en fonctionnement en cas d'usure du deuxième joint dynamique.

## Revendications

1. Amortisseur comportant un cylindre (2;102) dans lequel une tige (4;104) est montée pour coulisser dans le cylindre au moyen de deux paliers (5,6; 105,106) disposés entre le cylindre (2;102) et la tige (4 ;104) de sorte que lesdits paliers (5, 6; 105, 106) , le cylindre (2;102) et la tige (4;104) délimitent entre eux une chambre annulaire (7;107), l'un au moins des paliers (6; 106) portant :
- des moyens d'étanchéité (8;108) avec au moins deux joint dynamiques (9,10;109,110) en contact avec celui de la tige (4;104) ou du cylindre (2;102) coulissant relativement audit palier, les deux joints dynamiques définissant entre eux un espace inter-joints (11;111),
- des moyens de clapet (12;112) installés dans un conduit (20;120) du palier s'étendant entre la chambre annulaire et l'espace inter-joints pour mettre sélectivement en communication la chambre annulaire (7;107) et l'espace inter-joints (11;111) ;
ces moyens de clapet (12;112) étant passifs et sont **caractérisés en ce qu'**ils sont agencés pour mettre normalement en communication la chambre annulaire (7;107) avec l'espace inter-joints (11;111) et isoler automatiquement l'espace inter-joints de la chambre annulaire si la pression dans la chambre annulaire (7;107) est supérieure à une pression seuil déterminée.

## Patentansprüche

1. Stoßdämpfer, umfassend einen Zylinder (2; 102), in dem eine Stange (4; 104) derart gelagert ist, dass sie sich in dem Zylinder mittels zweier Lager (5, 6; 105, 106) verschieben kann, die zwischen dem Zylinder (2; 102) und der Stange (4; 104) derart angeordnet sind, dass die Lager (5, 6; 105, 106), der Zylinder (2; 102) und die Stange (4; 104) zwischen sich eine ringförmige Kammer (7; 107) begrenzen, wobei mindestens eines der Lager (6; 106) trägt:
- Dichtungsmittel (8; 108) mit mindestens zwei dynamischen Dichtungen (9, 10; 109, 110) in Kontakt mit demjenigen Element ausgewählt aus der Stange (4; 104) oder dem Zylinder (2; 102), das relativ zu dem genannten Lager gleitet, wobei die beiden dynamischen Dichtungen zwischen sich einen Zwischendichtungsraum definieren (11; 111),
- Ventilmittel (12; 112), die in einer Leitung (20; 120) des Lagers montiert sind und sich zwischen der ringförmigen Kammer und dem Zwischendichtungsraum erstrecken, um die ringförmige Kammer (7; 107) und den Zwischendichtungsraum (11; 111) selektiv zu verbinden,
wobei diese Ventilmittel (12; 112) passiv und **dadurch gekennzeichnet sind, dass** sie derart angeordnet sind, dass sie normalerweise die ringförmige Kammer (7; 107) mit dem Zwischendichtungsraum (11; 111) verbinden und den Zwischendichtungsraum automatisch von der ringförmigen Kammer isolieren, wenn der Druck in der ringförmigen Kammer (7; 107) größer als ein gegebener Schwellendruck ist.

## Claims

1. Shock absorber including a cylinder (2; 102) in which a rod (4; 104) is mounted so as to slide in the cylinder by means of two bearings (5, 6; 105, 106) arranged between the cylinder (2; 102) and the rod (4; 104) so that said bearings (5, 6; 105, 106), the cylinder (2; 102) and the rod (4; 104) define therebetween an annular chamber (7; 107), at least one of the bearings (6; 106) supporting:
- a sealing means (8; 108) with at least two dynamic seals (9, 10; 109, 110) in contact with that of the rod (4; 104) or the cylinder (2; 102) sliding relative to said bearing, the two dynamic seals defining an inter-seal space (11; 111) therebetween,
- a valve means (12; 112) installed in a duct (20; 120) of the bearing extending between the annular chamber and the inter-seal space in order selectively to connect the annular chamber (7; 107) and the inter-seal space (11; 111),
these valve means (12; 112) being passive and **characterized in that** they are arranged so as to establish a normal connection between the annular chamber (7; 107) and the inter-seal space (11; 111) and automatically to isolate the inter-seal space from the annular chamber if the pressure in the annular chamber (7; 107) is higher than a predetermined threshold pressure.
